# FASCICULE DE BREVET EUROPEEN

(11) **EP 3 023 306 B1**
(45) Date de publication et mention de la délivrance du brevet: **25.10.2017**
(21) Numéro de dépôt: 15195149.8
(22) Date de dépôt: 18.11.2015
(51) Int. Cl.: B60R 19/34

(54) **ENSEMBLE DE PARE-CHOCS COMPRENANT UNE ÂME FORMÉE DE DEUX DEMI-ÂMES ET UNE COQUE FORMÉE DE DEUX DEMI-COQUES**
STOSSSTANGENANORDNUNG, DIE EIN SEELE AUS ZWEI HALBSEELEN UND EINE SCHALE AUS ZWEI HALBSCHALEN UMFASST
A BUMPER ASSEMBLY COMPRISING A CORE FORMED BY TWO HALF-CORES AND A SHELL FORMED BY TWO HALF-SHELLS

(30) Priorité: 21.11.2014 FR 1461298
(43) Date de publication de la demande: 25.05.2016
(73) Titulaire: Flex-N-Gate France, 75008 Paris (FR)
(72) Inventeur: BORDE, Patrick, 25200 Montbeliard (FR)
(74) Mandataire: Lavoix

(56) Documents cités:
- EP-A1- 2 762 367
- DE-A1- 10 359 483
- KR-A- 20090 070 809
- US-A1- 2008 106 107

## Description

La présente invention concerne un ensemble de pare-chocs pour véhicule automobile, du type comprenant une traverse destinée à s'étendre suivant une direction transversale du véhicule automobile, et au moins un absorbeur de choc lié à la traverse, l'absorbeur de chocs étant destiné à être interposé entre la traverse et un longeron du véhicule automobile, l'absorbeur de chocs comprenant une âme centrale reliant la traverse au longeron, ladite âme centrale étant formée d'une première demi-âme et d'une deuxième demi-âme appliquées l'une contre l'autre dans un plan de jonction de l'âme, et une coque propre à se déformer sous l'effet d'une force de compression longitudinale, la coque entourant l'âme centrale et étant formée d'une première demi-coque et d'une deuxième demi-coque appliquées l'une contre l'autre dans un plan de jonction de la coque.

L'invention concerne également un véhicule automobile comprenant un tel ensemble de pare-chocs.

Le document FR-3 001 680 décrit par exemple un tel ensemble de pare-chocs qui correspond au préambule de la revendication 1 et qui présente l'avantage d'être peu coûteux et léger, notamment lorsque les deux demi-coques des absorbeurs sont réalisées en matériau composite.

Dans cet ensemble de pare-chocs, l'âme de chaque absorbeur est formée de deux demi-âmes assemblées dans un plan d'assemblage et la coque de chaque absorbeur de deux demi-coques assemblées dans un plan d'assemblage confondu avec le plan d'assemblage des deux demi-âmes. Ainsi, dans cet ensemble de pare-chocs, la liaison entre les deux demi-coques et la liaison entre les deux demi-âmes s'étendent un même plan. Un tel ensemble n'est pas satisfaisant en termes de robustesse car la stabilité des absorbeurs ainsi formés est réduite.

L'un des buts de l'invention est de proposer un ensemble de pare-chocs présentant une plus grande robustesse, notamment en augmentant la stabilité de l'absorbeur.

A cet effet, l'invention concerne un ensemble de pare-chocs du type précité, dans lequel le plan de jonction de l'âme et le plan de jonction de la coque forment entre eux un angle non nul.

En s'assurant que le plan d'assemblage des demi-âmes et celui des demi-coques ne sont pas confondus, on augmente la stabilité de l'assemblage de l'absorbeur et ainsi la robustesse de l'ensemble de pare-chocs.

Selon d'autres caractéristiques de l'ensemble de pare-chocs selon l'invention :
- le plan de jonction de l'âme et le plan de jonction de la coque sont sensiblement perpendiculaires ;
- les première et deuxième demi-coques comprennent chacune au moins un épaulement à l'une des extrémités transversales de la demi-coque dans le plan de liaison de coque, les épaulements des première et deuxième demi-coques étant appliqués l'un contre l'autre dans ledit plan de liaison de coque et formant la liaison entre la première et la deuxième demi-coques ;
- la première demi-âme et la deuxième demi-âme comprennent à chacune de leurs extrémités longitudinales une platine d'assemblage respectivement au longeron et à la traverse ;
- chaque platine d'assemblage à la traverse comprend un décrochement à son extrémité libre, ledit décrochement formant, avec le décrochement de l'autre platine d'assemblage à la traverse, un logement de réception de la traverse ;
- la première et la deuxième demi-coques comprennent à chacune de leurs extrémités longitudinales une languette s'étendant sensiblement longitudinalement, chaque languette étant disposée entre deux platines d'assemblage ;
- la coque présente une section transversale circulaire ou polygonale ;
- la traverse et/ou l'absorbeur de chocs sont en matériau composite ;
- la première et la deuxième demi-âmes définissent entre elles un canal de réception s'étendant selon la direction longitudinale entre la traverse et le longeron ;
- il comprend deux absorbeurs de chocs liés à la traverse, les deux absorbeurs étant espacés l'un de l'autre selon la direction transversale.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective, de trois-quarts arrière, de l'ensemble de pare-chocs selon l'invention,
- la Fig. 2 est une représentation schématique en perspective d'un absorbeur de l'ensemble de pare-chocs de la Fig. 1,
- la Fig. 3 est une représentation schématique en perspective de la coque de l'absorbeur de la Fig. 2, et
- la Fig. 4 est une représentation schématique en perspective de l'âme de l'absorbeur de la Fig. 2.

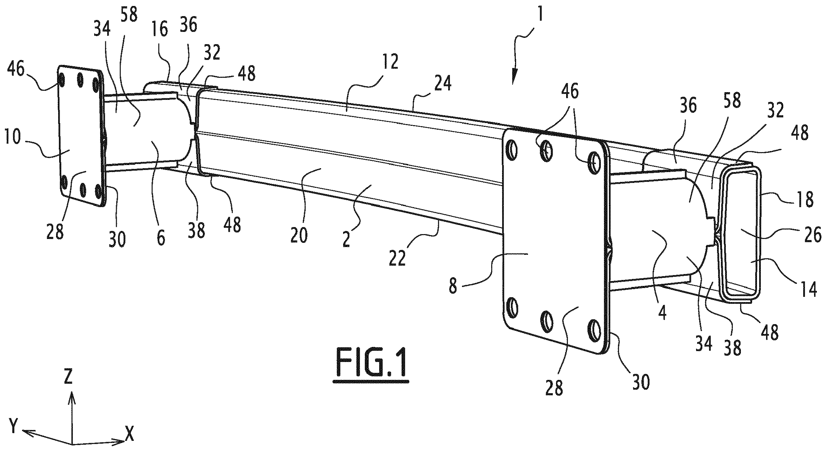

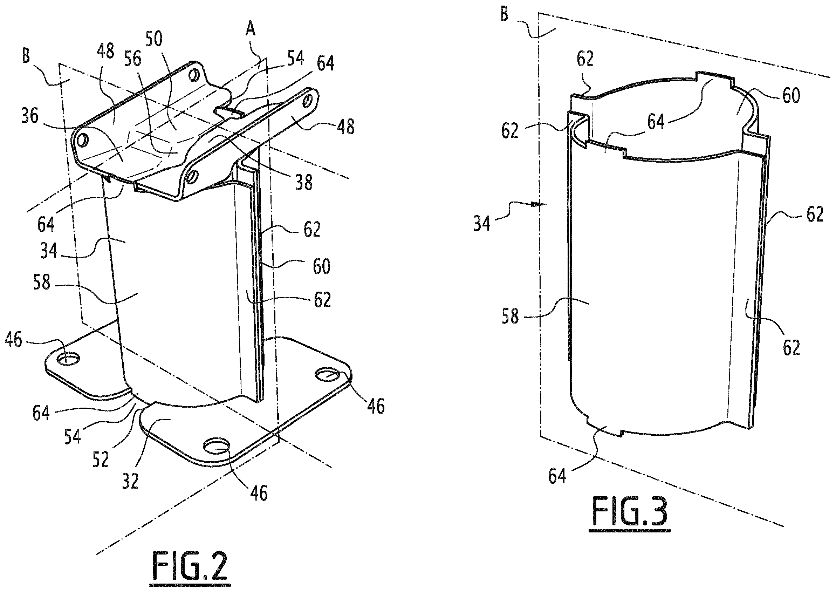

Dans tout ce qui suit, les termes d'orientation s'entendent par rapport au repère orthogonal pris en référence au sens de déplacement normal du véhicule automobile, représenté sur les figures 1 et 2 et dans lequel on distingue :
- un axe longitudinal X, correspondant à la direction arrière-avant d'un véhicule automobile ;
- un axe transversal Y, correspondant à la largeur d'un véhicule automobile ; et
- un axe d'élévation Z, correspondant à la direction d'élévation d'un véhicule automobile.

Un ensemble de pare-chocs 1 selon l'invention est représenté sur la Fig. 1. Il appartient à un véhicule automobile (non représenté) comprenant un châssis (non représenté) et deux longerons (non représentés). Chaque longeron s'étend suivant la direction longitudinale X, et les longerons sont espacés l'un de l'autre suivant la direction transversale Y. L'ensemble de pare-chocs 1 peut être installé à l'arrière et/ou à l'avant du véhicule automobile.

L'ensemble de pare-chocs 1 comprend de façon classique une traverse 2, deux absorbeurs de chocs 4, 6, et deux platines 8, 10 de fixation des absorbeurs de chocs 4, 6 aux longerons du véhicule automobile.

La traverse 2 est formée par une poutre, par exemple réalisée en matériau composite, s'étendant sensiblement suivant la direction transversale Y. Par matériau composite, on entend un matériau comprenant une matrice à base de matériau plastique, telle qu'une résine de matériau thermoplastique, et des fibres, telles que des fibres de verre ou autre, noyées dans la matrice. A titre d'exemple, le matériau composite comprend un élément de renfort tissé, typiquement en fibre de carbone ou en fibre de verre, noyé dans une matrice typiquement en polypropylène ou polyamide. Selon un mode de réalisation, la traverse 2 est en particulier légèrement arquée, ou bombée, vers l'avant, c'est-à-dire selon la direction longitudinale. Par « légèrement », on comprend que le rayon de courbure de la traverse 2 est supérieur à 5 mètres. La région médiane 12 de la traverse 2, qui est sensiblement à équidistance des extrémités transversales 14, 16, est ainsi disposée en avant des extrémités transversales 14, 16 suivant la direction longitudinale X.

Selon le mode de réalisation représenté sur la Fig. 1, la poutre est creuse afin de former une traverse 2 légère tout en présentant des caractéristiques de rigidité et d'absorption d'énergie satisfaisantes pour la fonction de pare-chocs que doit remplir l'ensemble de pare-chocs 1. La traverse 2 comprend, selon la direction longitudinale, une paroi avant 18 et une paroi arrière 20 ainsi que, selon la direction d'élévation, une paroi inférieure 22 et une paroi supérieure 24 joignant les parois avant 18 et arrière 20. Ces parois encadrent un volume interne 26 de la traverse 2.

Le volume interne 26 s'étend transversalement sur toute la traverse 2 et débouche vers l'extérieur aux extrémités transversales 14 et 16 de la traverse 12. Le volume interne 26 présente par exemple une section longitudinale de forme sensiblement rectangulaire.

Chaque platine 8, 10 s'étend sensiblement dans un plan formé par la direction transversale et par la direction d'élévation. Chaque platine 8, 10 comprend une face arrière 28 et une face avant 30. La face arrière 28 est fixée à un longeron du véhicule, et la face avant 30 est fixée à un absorbeur de chocs 4, 6.

Chaque absorbeur de chocs 4, 6 est interposé entre la traverse 2 et une platine 8, 10 du véhicule automobile. Chaque absorbeur de chocs 4, 6 est adapté pour se déformer en absorbant de l'énergie sous l'effet d'une force de compression longitudinale supérieure à un seuil prédéterminé exercée sur lui. Plus particulièrement, chaque absorbeur de chocs 4, 6 est agencé pour s'écraser selon son axe longitudinal sous l'effet de cette force de compression longitudinale.

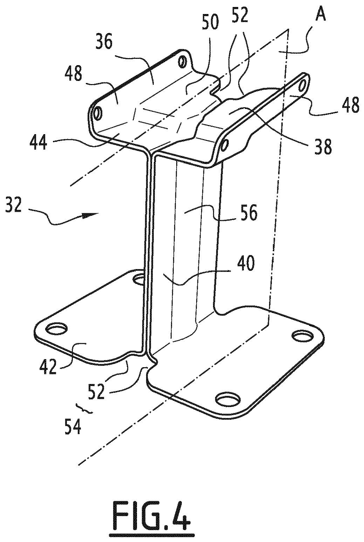

Chaque absorbeur de chocs 4, 6 comprend une âme centrale 32, plus particulièrement représentée sur la Fig. 4, et une coque 34, plus particulièrement représentée sur la Fig. 3. Les deux absorbeurs de chocs 4, 6 sont sensiblement identiques et seuls l'un d'entre eux va à présent être décrit.

L'âme centrale 32 est fixée d'une part à la traverse 2 et d'autre part à une platine de sorte à relier la traverse 2 à cette platine. L'âme centrale 32 est formée d'une première demi-âme 36 et d'une deuxième demi-âme 38. Les première et deuxième demi-âmes 36 et 38 sont par exemple sensiblement symétriques l'une de l'autre par rapport à un plan A de jonction de l'âme, dans lequel les première et deuxième demi-âmes sont appliquées l'une contre l'autre et fixées l'une à l'autre.

Chaque demi-âme 36, 38 comprend une portion centrale 40, s'étendant essentiellement dans un plan parallèle au plan A de jonction de l'âme et selon la direction longitudinale X, et une platine d'assemblage arrière 42, ou platine d'assemblage au longeron, et une platine d'assemblage avant 44, ou platine d'assemblage à la traverse, s'étendant respectivement à chacune des extrémités longitudinales de la portion centrale 40 dans des plans sensiblement perpendiculaires au plan A de jonction de l'âme. A l'état monté, les deux demi-âmes 36, 38 sont jointes dans le plan A de jonction de l'âme de sorte que les deux portions centrales 40 sont appliquées l'une contre l'autre, que les deux platines d'assemblage arrière 42 s'étendent dans la continuité l'une de l'autre et que les deux platines d'assemblage avant 44 s'étendent dans la continuité l'une de l'autre, comme représenté sur la Fig. 4. Les deux demi-âmes 36, 38 sont par exemple collées, soudées ou rivetées l'une à l'autre dans le plan A de jonction de l'âme pour former l'âme centrale 32.

L'âme centrale 32 est fixée à une platine 8, 10 par l'intermédiaire des platines d'assemblage arrière 42. Celles-ci sont par exemple pourvues d'orifices 46 de passage de moyens de fixation, tels que des vis ou des écrous, permettant d'assembler les platines d'assemblage arrière 42 et les platines 8, 10, qui comprennent des orifices correspondants, aux longerons du véhicule.

L'âme centrale 32 est fixée à la traverse 2 par l'intermédiaire des platines d'assemblage avant 44. Pour ce faire, chaque platine d'assemblage avant 44 comprend, à son extrémité libre opposée à la portion centrale 40, un décrochement 48 s'étendant sensiblement perpendiculairement à la platine d'assemblage avant 44 vers la traverse. Le décrochement 48 d'une platine d'assemblage avant 44 forme, avec le décrochement de l'autre platine d'assemblage avant 44, un logement 50 de réception de la traverse 2, permettant d'enserrer la traverse 2 entre les deux décrochements 48 comme représenté sur la Fig. 1. Ainsi, le décrochement 48 de la première demi-âme 36 est appliqué contre la paroi supérieure 24 de la traverse 2 et le décrochement 48 de la deuxième demi-âme 38 est appliqué contre la paroi inférieure 22 de la traverse 2. Les décrochements 48 sont par exemple vissés à ces parois inférieure 22 et supérieure 24 de sorte à fixer l'âme centrale 32 à la traverse 2.

Les platines d'assemblage arrière 42 et avant 44 comprennent chacune un évidement 52 s'étendant sensiblement transversalement aux coins formés entre la portion centrale 40 et les platines d'assemblage arrière 42 et avant 44. Les évidements 52 des deux platines avant et des deux platines arrière s'étendant en regard l'un de l'autre forment entre eux un logement 54 s'étendant entre les deux platines de part et d'autre de la portion centrale 40.

Selon un mode de réalisation, l'âme centrale 32 de l'un des absorbeurs peut comprendre en outre un canal de réception 56 d'un élément fonctionnel du véhicule automobile tel qu'un anneau de remorquage ou autre (non représenté). Le canal de réception 56 présente par exemple la forme d'un tube s'étendant sensiblement longitudinalement des platines d'assemblage avant 44 aux platines d'assemblage arrière 42 et défini par les deux demi-âmes 36 et 38, comme représenté sur la Fig. 4. En variante, chaque âme centrale 32 comprend un tel canal de réception 56. Le canal de réception 56 s'étend en regard d'un orifice traversant de la traverse permettant le passage de l'élément fonctionnel et sa fixation à la platine correspondante par exemple.

La coque 34 entoure l'âme centrale 32 et est propre à se déformer sous l'effet d'une force de compression longitudinale. Elle est formée par une première demi-coque 58 et une deuxième demi-coque 60. Les première et deuxième demi-coques 58 et 60 sont par exemple sensiblement symétriques l'une de l'autre par rapport à un plan B de jonction de la coque, dans lequel les première et deuxième demi-coques sont appliquées l'une contre l'autre et fixées l'une à l'autre.

La coque 34 est par exemple cylindrique à base circulaire, comme visible sur les Fig. 1 et 2, ou cylindrique à base polygonale, par exemple rectangulaire ou autre. La coque 34 présente ainsi une forme tubulaire de section circulaire ou polygonale s'étendant suivant la direction longitudinale X. En variante, la coque 34 peut être conique, c'est-à-dire que la distance entre la coque 34 et l'âme centrale 32 varie selon la direction longitudinale X.

Comme représenté sur les figures 1 à 3, les demi-coques 58, 60 présentent des sections transversales identiques l'une à l'autre. En variante, la première demi-coque 58 présente une section transversale différente de la section transversale de la deuxième demi-coque 60 correspondante. La forme, l'épaisseur et le matériau de la coque 34 peuvent être adaptés au comportement souhaité des absorbeurs en cas de choc et/ou à l'espace disponible dans le véhicule autour de l'ensemble de pare-chocs. Chaque demi-coque 58, 60 est par exemple réalisée en matériau composite afin de présenter une masse réduite et un comportement en absorption d'énergie satisfaisant.

Lorsque les demi-coques ont la même section, elles sont sensiblement symétriques l'une de l'autre par rapport au plan B de jonction de la coque.

Les première et deuxième demi-coques 58 et 60 sont jointes l'une à l'autre par des épaulements 62 s'étendant le long de chaque extrémité transversale des demi-coques 58 et 60 dans un plan parallèle au plan B de jonction de la coque. A l'état monté, les épaulements 62 de la première demi-coque 58 sont appliqués contre les épaulements 62 en regard de la deuxième demi-coque 60 dans le plan B de jonction de la coque de sorte à assembler les première et deuxième demi-coques 58, 60 ensembles autour de l'âme centrale 32, comme représenté sur les Fig. 1 et 2.. Les épaulements d'une demi-coque 58, 60 sont diamétralement opposées sur la circonférence de la demi-coque. Les épaulements 62 des demi-coques 58, 60 sont fixés l'un à l'autre, par exemple par soudage, collage, ou rivetage.

Chaque demi-coque 58, 60 comprend en outre, à chacune de ses extrémités longitudinales une languette 64 s'étendant sensiblement longitudinalement en saillie des extrémités longitudinales. Les languettes 64 sont décalées angulairement par rapport aux épaulements 62, c'est-à-dire que les languettes 64 ne sont pas alignées selon la direction longitudinale avec les épaulements 62, comme cela va être décrit ultérieurement.

A l'état monté, c'est-à-dire lorsque les demi-âmes 38 et 40 sont assemblées pour former l'âme centrale 32 et lorsque les demi-coques 58, 60 sont assemblées autour de l'âme centrale 32 pour former la coque 34, le plan B de jonction de la coque forme un angle non nul avec le plan A de jonction de l'âme. C'est-à-dire que le plan B de jonction de la coque et le plan A de jonction de l'âme ne sont pas confondus ou parallèles. Un tel décalage angulaire entre les deux plans de jonction permet d'augmenter la stabilité de l'absorbeur. En effet, lorsqu'un choc se répercute sur l'absorbeur 4, et en particulier lorsque ce choc n'est pas aligné sur l'axe longitudinal de l'absorbeur, c'est-à-dire lorsque la direction du choc forme un angle avec l'axe longitudinal de l'absorbeur, le fait que les plans A et B de jonction de l'âme et de la coque ne sont pas confondus permettent à l'absorbeur de ne pas fléchir, ce qui réduirait l'absorption de l'énergie due au choc par l'absorbeur. En effet, l'absorption d'énergie est optimale lorsque la coque s'écrase selon son axe longitudinal tout fléchissement entraîne une déformation de la coque selon un autre axe, ce qui réduit la portion de la coque s'écrasant selon l'axe longitudinal et donc l'absorption d'énergie. Ainsi, en prévoyant des plans de jonction A et B non confondus, on stabilise la déformation de l'absorbeur selon l'axe longitudinal, notamment lorsque le choc n'est pas appliqué selon cet axe longitudinal.

Selon le mode de réalisation représenté sur les figures, l'angle formé entre les deux plans de jonction A et B est sensiblement égal à 90°, c'est-à-dire que les plans de jonction A et B sont sensiblement perpendiculaires, ce qui offre une stabilité optimale à l'absorbeur.

Afin de bloquer angulairement la coque 34 par rapport à l'âme centrale 32 et afin de les fixer l'un à l'autre, les languettes 62 des demi-coques 58, 60 sont placées dans les logements 54 de l'âme centrale 32. Par conséquent, le placement angulaire des languettes par rapport au plan B de jonction de la coque est choisi pour correspondre à l'emplacement des logements 54 lorsque l'âme centrale 32 est assemblée afin que les languettes 62 se logent dans ces logements 54, entre deux platines d'assemblage, lorsque la coque 34 est assemblée autour de l'âme centrale 32.

Chaque ensemble de pare-chocs décrit ci-dessus présente donc un bon compromis poids-prix grâce à l'emploi de matériaux composites.

En outre, cet ensemble de pare-chocs est facile à fabriquer, du fait que les formes des différentes pièces sont particulièrement faciles à obtenir, par exemple par simple thermocompression ou injection.

Cette fabrication est encore facilitée dans le cas où la liaison entre les différentes pièces est assurée par simple soudage, collage, ou rivetage.

Par ailleurs, l'ensemble de pare-chocs selon l'invention offre une très bonne tenue mécanique. Celle-ci découle du fait des surfaces de contact étendues entre d'une part l'âme centrale et la traverse, et d'autre part entre les platines d'assemblage au longeron de l'âme centrale et la platine ou le longeron. En outre, comme décrit précédemment, la stabilité des absorbeurs est augmentée du fait du décalage angulaire entre les plans de jonction de l'âme et de la coque.

Enfin, l'ensemble de pare-chocs selon l'invention présente une capacité d'absorption aisément modulable. En effet, les première et deuxième demi-coques sont facilement dissociables de l'âme centrale et peuvent ainsi être échangées en fonction de la capacité d'absorption que l'on souhaite obtenir. La forme, l'épaisseur, et le matériau de chaque demi-coque peuvent varier de manière particulièrement aisée. Il est ainsi possible d'adapter le comportement et l'encombrement de l'ensemble de pare-chocs au type de véhicule automobile sur lequel il est installé.

On notera également que chaque ensemble de pare-chocs avant décrit ci-dessus est facilement adaptable pour constituer un ensemble arrière de véhicule automobile. Il suffit à cet effet de pivoter l'ensemble avant de 180° autour de l'axe vertical Z et de le fixer aux extrémités arrières des longerons du véhicule.

## Revendications

1. Ensemble de pare-chocs pour véhicule automobile, comprenant une traverse (2) destinée à s'étendre suivant une direction transversale du véhicule automobile, et au moins un absorbeur de choc (4, 6) lié à la traverse (2), l'absorbeur de chocs (4, 6) étant destiné à être interposé entre la traverse (2) et un longeron du véhicule automobile, l'absorbeur de chocs (4, 6) comprenant une âme centrale (32) reliant la traverse (2) au longeron, ladite âme centrale (32) étant formée d'une première demi-âme (36) et d'une deuxième demi-âme (38) appliquées l'une contre l'autre dans un plan (A) de jonction de l'âme, et une coque (34) propre à se déformer sous l'effet d'une force de compression longitudinale, la coque (34) entourant l'âme centrale (32) et étant formée d'une première demi-coque (58) et d'une deuxième demi-coque (60) appliquées l'une contre l'autre dans un plan (B) de jonction de la coque, **caractérisé en ce que** le plan (A) de jonction de l'âme et le plan (B) de jonction de la coque forment entre eux un angle non nul.

2. Ensemble de pare-chocs selon la revendication 1, **caractérisé en ce que** le plan (A) de jonction de l'âme et le plan (B) de jonction de la coque sont sensiblement perpendiculaires.

3. Ensemble de pare-chocs selon la revendication 1 ou 2, **caractérisé en ce que** les première et deuxième demi-coques (58, 60) comprennent chacune au moins un épaulement (62) à l'une des extrémités transversales de la demi-coque (58, 60) dans le plan (B) de liaison de coque, les épaulements (62) des première et deuxième demi-coques (58, 60) étant appliqués l'un contre l'autre dans ledit plan (B) de liaison de coque et formant la liaison entre la première et la deuxième demi-coques (58, 60).

4. Ensemble de pare-chocs selon l'une quelconque des revendications 1 à 3, **caractérisé en ce que** la première demi-âme (36) et la deuxième demi-âme (38) comprennent à chacune de leurs extrémités longitudinales une platine d'assemblage respectivement au longeron (42) et à la traverse (44).

5. Ensemble de pare-chocs selon la revendication 4, **caractérisé en ce que** chaque platine d'assemblage (44) à la traverse comprend un décrochement (48) à son extrémité libre, ledit décrochement (48) formant, avec le décrochement (48) de l'autre platine d'assemblage (44) à la traverse, un logement (50) de réception de la traverse.

6. Ensemble de pare-chocs selon la revendication 4 ou 5, **caractérisé en ce que** la première et la deuxième demi-coques (58, 60) comprennent à chacune de leurs extrémités longitudinales une languette (64) s'étendant sensiblement longitudinalement, chaque languette (64) étant disposée entre deux platines d'assemblage (42, 44).

7. Ensemble de pare-chocs selon l'une quelconque des revendications 1 à 6, **caractérisé en ce que** la coque (34) présente une section transversale circulaire ou polygonale.

8. Ensemble de pare-chocs selon l'une quelconque des revendications 1 à 7, **caractérisé en ce que** la traverse (2) et/ou l'absorbeur de chocs (4, 6) sont en matériau composite.

9. Ensemble de pare-chocs selon l'une quelconque des revendications 1 à 8, **caractérisé en ce que** la première et la deuxième demi-âmes (36, 38) définissent entre elles un canal de réception (56) s'étendant selon la direction longitudinale entre la traverse (2) et le longeron.

10. Ensemble de pare-chocs selon l'une quelconque des revendications 1 à 9, **caractérisé en ce qu'**il comprend deux absorbeurs (4, 6) de chocs liés à la traverse (2), les deux absorbeurs (4, 6) étant espacés l'un de l'autre selon la direction transversale.

## Patentansprüche

1. Stoßstangenanordnung für ein Kraftfahrzeug, aufweisend einen Querträger (2), der vorgesehen ist, um sich entlang einer Querrichtung des Kraftfahrzeugs zu erstrecken, und mindestens einen Stoßdämpfer (4, 6), der mit dem Querträger (2) verbunden ist, wobei der Stoßdämpfer (4, 6) vorgesehen ist, um zwischen dem Querträger (2) und einem Längsträger des Kraftfahrzeugs angeordnet zu sein, wobei der Stoßdämpfer (4, 6) aufweist einen zentralen Steg (32), der den Querträger (2) mit dem Längsträger verbindet, wobei der zentrale Steg (32) aus einem ersten Halbsteg (36) und aus einem zweiten Halbsteg (38) gebildet ist, die in einer Ebene (A) zum Verbinden des Stegs aneinander anliegen, und eine Schale (34), die geeignet ist, sich unter der Einwirkung einer Längskompressionskraft zu verformen, wobei die Schale (34) den zentralen Steg (32) umgibt und aus einer ersten Halbschale (58) und aus einer zweiten Halbschale (60) gebildet ist, die in einer Ebene (B) zum Verbinden der Schale aneinander anliegen, **dadurch gekennzeichnet, dass** die Ebene (A) zum Verbinden des Stegs und die Ebene (B) zum Verbinden der Schale zwischen einander einen von Null abweichenden Winkel ausbilden.

2. Stoßstangenanordnung gemäß Anspruch 1, **dadurch gekennzeichnet, dass** die Ebene (A) zum Verbinden des Stegs und die Ebene (B) zum Verbinden der Schale im Wesentlichen senkrecht sind.

3. Stoßstangenanordnung gemäß Anspruch 1 oder 2, **dadurch gekennzeichnet, dass** die erste und die zweite Halbschale (58, 60) jeweils mindestens einen Absatz (62) an dem einen der transversalen Enden der Halbschale (58, 60) in der Ebene (B) zum Verbinden der Schale aufweisen, wobei die Absätze (62) der ersten und der zweiten Halbschale (58, 60) in der Ebene (B) zum Verbinden der Schale aneinander anliegen und die Verbindung zwischen der ersten und der zweiten Halbschale (58, 60) ausbilden.

4. Stoßstangenanordnung gemäß irgendeinem der Ansprüche 1 bis 3, **dadurch gekennzeichnet, dass** der erste Halbsteg (36) und der zweite Halbsteg (38) an jedem ihrer Längsenden eine Platte zum jeweiligen Montieren an dem Längsträger (42) und an dem Querträger (44) aufweisen.

5. Stoßstangenanordnung gemäß Anspruch 4, **dadurch gekennzeichnet, dass** jede Platte zum Montieren (44) an dem Querträger an ihrem freien Ende einen Rücksprung (48) aufweist, wobei der Rücksprung (48) mit dem Rücksprung (48) der anderen Platte zum Montieren (44) an dem Querträger eine Aufnahme (50) zum Aufnehmen des Querträgers ausbildet.

6. Stoßstangenanordnung gemäß Anspruch 4 oder 5, **dadurch gekennzeichnet, dass** die erste und die zweite Halbschale (58, 60) an jedem ihrer Längsenden eine Lasche (64) aufweisen, die sich im Wesentlichen in Längsrichtung erstreckt, wobei jede Lasche (64) zwischen zwei Platten zum Montieren (42, 44) angeordnet sind.

7. Stoßstangenanordnung gemäß irgendeinem der Ansprüche 1 bis 6, **dadurch gekennzeichnet, dass** die Schale (34) einen kreisförmigen oder polygonalen Querschnitt hat.

8. Stoßstangenanordnung gemäß irgendeinem der Ansprüche 1 bis 7, **dadurch gekennzeichnet, dass** der Querträger (2) und/oder der Stoßdämpfer (4, 6) aus Verbundmaterial sind.

9. Stoßstangenanordnung gemäß irgendeinem der Ansprüche 1 bis 8, **dadurch gekennzeichnet, dass** der erste und der zweite Halbsteg (36, 38) zwischen einander einen Aufnahmekanal (56) definieren, der sich entlang der Längsrichtung zwischen dem Querträger (2) und dem Längsträger erstreckt.

10. Stoßstangenanordnung gemäß irgendeinem der Ansprüche 1 bis 9, **dadurch gekennzeichnet, dass** sie zwei Stoßdämpfer (4, 6) aufweist, die mit dem Querträger (2) verbunden sind, wobei die beiden Dämpfer (4, 6) entlang der Querrichtung im Abstand voneinander sind.

## Claims

1. Bumper assembly for automotive vehicle, comprising a cross member (2) intended to extend along a transverse direction of the automotive vehicle, and at least one shock absorber (4, 6) attached to the cross member (2), the shock absorber (4, 6) being intended to be interposed between the cross member (2) and a side rail of the automotive vehicle, the shock absorber (4, 6) comprising a central core (32) connecting the cross member (2) to the side rail, said central core (32) being formed from a first half-core (36) and a second half-core (38) applied against each other in a junction plane (A) of the core, and a shell (34) capable of being deformed under the effect of a longitudinal compression force, the shell (34) surrounding the central core (32) and being formed from a first half-shell (58) and a second half-shell (60) applied against each other in a junction plane (B) of the shell, **characterised in that** the junction plane (A) of the core and the junction plane (B) of the shell together form a non-zero angle.

2. Bumper assembly according to claim 1, **characterised in that** the junction plane (A) and the junction plane (B) of the shell are essentially perpendicular.

3. Bumper assembly according to either of claims 1 or 2, **characterised in that** the first and second half-shells (58, 60) each comprise at least one flange (62) at one of the transverse ends of the half-shell (58, 60) in the shell connection plane (B), the flanges (62) of the first and second half-shells (58, 60) being applied against each other in said shell connection plane (B) and forming the connection between the first and second half-shells (58, 60).

4. Bumper assembly according to any one of claims 1 to 3, **characterised in that** the first half-core (36) and the second half-core (38) at each of their longitudinal ends comprise a mounting plate respectively to the side rail (42) and to the cross member (44).

5. Bumper assembly according to claim 4, **characterised in that** each mounting plate (44) at the cross member comprises a recess (48) at its free end, said recess (48) forming, with the recess (48) of the other mounting plate (44) at the cross member, a seat (50) for receiving the cross member.

6. Bumper assembly according to claim 4 or 5, **characterised in that** the first and second half-shells (58, 60) comprise at each of their longitudinal ends a tongue (64) extending essentially longitudinally, each tongue (64) being located between two mounting plates (42, 44).

7. Bumper assembly according to any one of claims 1 to 6, **characterised in that** the shell (34) has a circular or polygonal cross section.

8. Bumper assembly according to any one of claims 1 to 7, **characterised in that** the cross member (2) and/or the shock absorber (4, 6) are made of composite material.

9. Bumper assembly according to any one of claims 1 to 8, **characterised in that** the first and second half-cores (36, 38) define between them a receiving channel (56) extending in the longitudinal direction between the cross member (2) and the side rail.

10. Bumper assembly according to any one of claims 1 to 9, **characterised in that** it comprises two shock absorbers (4, 6) attached to the cross member (2), the two absorbers (4, 6) being spaced apart from each other along the transverse direction.
